# EUROPEAN PATENT SPECIFICATION

(11) **EP 0 440 875 B1**
(45) Date of publication and mention of the grant of the patent: **17.08.1994**
(21) Application number: 90111658.2
(22) Date of filing: 20.06.1990
(51) Int. Cl.: A23L 1/217

(54) **Process for preparing french fried potato strips with salt content**
Verfahren zur Herstellung von gesalzenen Pommes Frites
Procédé de préparation de frites salées

(30) Priority: 08.02.1990 US 477035
(43) Date of publication of application: 14.08.1991
(73) Proprietor: LAMB-WESTON, INC., Tri-Cities Washington 99302 (US)
(72) Inventor: Burrows, Christopher B., Kennewick, Washington 99336 (US); Olson Wheeler, Janet, Richland, Washington 99352 (US); Sloan, Jerry L., Richland, Washington 99352 (US)
(74) Representative: Brown, John David

(56) References cited:
- DE-B- 2 359 672
- GB-A- 1 579 392
- GB-A- 2 078 081
- US-A- 3 397 993
- US-A- 3 635 729
- US-A- 4 298 627
- US-A- 4 749 579
- US-A- 4 839 182
- PATENT ABSTRACTS OF JAPAN vol. 9, no. 145 (C-287)(1868) 20 June 1985, & JP-A-60 27358 (HOKUREN NOUGIYOU KIYOUDOU KUMIAI RENGOUKAI) 12 February 1985,

## Description

### Field of the Invention

The present invention relates generally to food processing, and more particularly to a method for preparing french fried potato strips.

### Background of the Invention

Commercially prepared french fried potato strips (or so-called french fries) typically are prepared by slicing whole potatoes into strips, blanching the strips in hot water, parfrying the strips in oil, and then freezing the strips. The frozen potato strips are reconstituted by frying them in oil, draining off the oil, and then salting them. Commercially prepared frozen french fried potato strips typically have a uniform, light golden color, a relatively dry mealy potato interior, and a somewhat subdued potato flavor.

Two known processes used in preparing potato products for the food service industry are disclosed in U.S. Patent No. 3,397,993 to Strong and U.S. Patent No. 3,635,729 to Englar.

The Strong patent discloses a process in which raw potato strips are blanched in either steam or hot water until the potato strips are turned uniformly translucent in appearance. The blanched strips are then dried in hot air at a temperature within the range of 65 to 177 degrees C (150 degrees to 350 degrees Fahrenheit) for 5 to 20 minutes, resulting in a weight loss of at least 20 percent. After the air drying step, the potato strips are parfried in oil at a temperature within the range of 149 to 191 degrees C (300 to 375 degrees Fahrenheit) for 15 to 60 seconds, and then frozen. The end user then reconstitutes the frozen strips by finish frying them in hot oil.

The Englar patent discloses a method of producing dehydrated hash brown potatoes with a final moisture content of 7.5 percent. In this process, the raw shredded potato is blanched in water within a temperature range of 82 to 100 degrees C (180 degrees to 212 degrees Fahrenheit) for 5 to 10 minutes. The blanching water contains a salt such as sodium acid pyrophosphate or sodium chloride or a combination of the two. In one example, the blanching water contains 454 g (1 pound) of sodium chloride in 450 ℓ (10 gallons) of water. The resulting precooked strips are then partially dehydrated in a fluidized bed dehydrator to a moisture content of 20 to 30 percent, coated with a starch solution, and then further dehydrated in a fluidized bed dehydrator to a final moisture content of 7.5 percent. The resulting dehydrated and starch coated potato product does not require refrigerated transportation or storage and is unaffected by temperature fluctuations.

Other known processes for preparing potato or other food products are identified below.

Lamb U.S. Patent No. 3,219,461 discloses a process for partially dehydrating and freezing food products, such as carrots, grapes, pears, and meat. In one example, carrots are blanched in steam, vacuum frozen and then subjected to a calcium chloride brine as the vacuum is released. As the vacuum is released, the calcium chloride brine is infused into the frozen product.

Chase U.S. Reissue Patent No. 23,890 discloses a process for preparing frozen potatoes in which the potato strips are blanched, cooled and dried to produce a 10 to 15 percent moisture loss and then frozen.

Netherland Patent 7703461 discloses a process for preparing potato chips in which potato slices are blanched in water, cooled, blanched again in water, dried in warm air to produce a 10 to 15 percent weight loss, equilibrated at room temperature, fried, and finally frozen.

In another prior commercial potato process, raw potato cubes or strips are immersion blanched in a hot water solution containing two percent sodium chloride for 5 to 10 minutes. The cubes are then washed in a water solution containing sodium acid pyrophosphate (to help preserve color) and sugar for 30 to 45 seconds. The cubes are then dried long enough to cause a loss in weight of 7 to 15 percent. The cubes are then parfried in oil at a temperature of 190 degrees C (375 degrees Fahrenheit) for 30 to 90 seconds, and then frozen. This process results in a finished potato product having a sodium chloride content of 0.8 to 1.2 percent.

In contrast to commercially prepared french fries, natural home-made french fries typically are prepared by cutting whole potatoes into strips and frying the strips. Homemade french fries typically have a darker, varied golden color, a stronger potato flavor and a relatively moist potato interior. Homemade french fries are quite distinct in character from commercially prepared french fry products.

There is a need in the food service industry for a frozen french fried product which, when reconstituted, more closely resembles a natural homemade french fry. Many restaurants desire to serve food that has the appearance and flavor of freshly prepared product, yet desire the relative ease, convenience, and economy of commercially manufactured products. Further, most commercially prepared french fries are not salted by the manufacturer because it is difficult to incorporate dehydrated salt at any step of traditional french fry processing. This results in the end user having to add salt to the product after the finish frying step, which in turn leads to non-uniform application of salt on the fried product both within a single batch, and more severely, between batches. Flavor differences may therefore be present in the finished product. Accordingly, there is a need for a frozen french fry that contains a uniform concentration of salt when the restaurant or other end user serves the product to the customer.

It is therefore one object of the present invention to provide a process for preparing high quality frozen french fried potato strips which have flavor, texture and visual attributes similar to homemade french fried potatoes.

Another object of the present invention is to provide a process for preparing frozen french fried potato strips which, upon reconstitution, have a desirably crisp outer surface, a moist interior, and a desirable flavor and texture.

Yet another object of the present invention is to provide a process for preparing frozen potato strips which, when reconstituted, have a uniformly dispersed salty taste, making it unnecessary for the end user to salt the product.

Still another object of the present invention is to provide a process for preparing frozen potato strips which, when reconstituted, having improved product characteristics.

Other objects and advantages of the invention will become apparent from the following detailed description.

### Summary of the Invention

In accordance with the foregoing objectives, the present invention comprises an improved process for preparing frozen french fried potato strips. The strips are blanched, immersed in a hot brine solution, partially air dried, parfried and then frozen. Optimally, the strips are blanched primarily in steam for 0.5 to 2 minutes. The blanched strips are then soaked in a brine solution containing 1 to 6 percent sodium chloride, at a temperature of 65 to 100 degrees C (150 to 210 degrees Fahrenheit). Immediately thereafter the strips are dried in hot air for 4 to 15 minutes, then parfried in oil, and frozen.

The foregoing process produces a high quality frozen french fry product having "homemade" appearance, texture, and flavor, and an integrally incorporated salt content.

### Detailed Description of a Preferred Embodiment

In accordance with the present invention, raw potatoes, preferably of the Russet Burbank variety, are cleaned, trimmed and inspected for defects. The potatoes are cleaned using a water flume or spray. The potatoes are then cut into sections suitably sized for french fried potato strips.

The potato strips are blanched primarily in steam at a temperature within the range of 93 to 109 degrees C (200 degrees Fahrenheit to 225 degrees Fahrenheit) for 0.5 to 2 minutes to gelatinize the potato cells. Preferably, the strips are blanched at 99 degrees C (210 degrees Fahrenheit) for 60 seconds. The steam blanching step affects several attributes of the finished product.

First, the blanching step minimizes the amount of leaching of natural sugars and flavor components present in the potato strips. Next, the blanching inactivates enzymes present in the raw potato product which would otherwise cause oxidation. Finally, the blanching step gelatinizes the potato cells at the surface of the strips and also reduces the amount of fat absorbed by the strips during later processing. As a result, the blanching step contributes to a final product having a crisp external surface, a desirable moist internal texture, and a hearty potato flavor.

It is not essential that strips be blanched exclusively in steam. For example, the strips may be blanched in a steam blancher having hot water traps at entrance and exit ends which serve to allow strips to enter and exit the blancher on a conveyor without allowing steam to escape from the blancher. In this type of blancher, the strips enter the blancher on a conveyor and pass through a first water trap at a temperature within the range of 18 to 93 degrees C (65 to 200 degrees Fahrenheit), and located just inside the entrance of the blancher. The conveyer then carries the strips out of the water trap and into a steam blanching chamber for a predetermined length of time. The strips are discharged from the blancher by passing them through a second water trap similar to the entrance water trap.

The blanched strips are next soaked in a brine solution, which contains about 1 to 6 percent sodium chloride by weight, and has a temperature of 65 to 100 degrees C (150 to 210 degrees Fahrenheit), for 15 to 90 seconds. Preferably, the brine solution contains about 2 to 4 percent sodium chloride at a temperature of 82 to 93 degrees C (180 to 200 degrees Fahrenheit), and the potato strips are soaked for 30 to 45 seconds. The brine solution may contain other ingredients such as dextrose or salts such as sodium acid pyrophosphate. The elevated temperature of the salt brine solution increases the efficiency of uptake of salt by the potato tissue since the potato cells absorb the salt more efficiently at higher temperatures. The brine soaking step is preferably a separate and distinct step from the prior blanching step.

Immediately after the potato strips are removed from the salt brine solution, they are dried in hot air at a temperature within the range of 65 to 109 degrees C (150 to 225 degrees Fahrenheit) for 4 to 15 minutes, preferably at 100 degrees C (210 degrees Fahrenheit) for about five minutes. The drying time will vary, and depends primarily on the size of the potato strip. The drying step reduces the weight of the potato strips at least five percent, and preferably by 10 to 15 percent. The drying of the surface of the potato strips helps to bind the salt which was introduced into the potato in the prior brine soaking step by dehydration of the surface moisture of the potato cells. The drying step also enhances the crispness of the surface texture.

The partially dried strips are next parfried in hot oil at a temperature within the range of 163 to 204 degrees C (325 to 400 degrees Fahrenheit), preferably at 188 degrees C (370 degrees Fahrenheit). The frying time is within the range of 10 to 120 seconds, and preferably for about 50 seconds. Par frying increases the solids content of each potato strip by causing it to lose moisture and absorb oil. Par frying is continued for a period of time sufficient to cause the strips to have a solids content preferably within the range of 25 to 40 percent, depending upon the thickness of the strip. The parfried strips will have a sodium chloride content within the range of 0.5 to 2 percent by weight, and an oil content within the range of 1 to 12 percent by weight, also depending upon the size of the strip. The drying and parfrying steps increase the solids content of the strips by decreasing the moisture content; as a result the sodium chloride content of the strips is increased slightly in each of these steps.

The strips are next frozen and packaged in a conventional manner for storage and/or shipment.

The frozen potato strips are reconstituted by finish frying them in oil at a temperature within the range of 166 to 188 degrees C (about 330 to 370 degrees Fahrenheit), preferably at 177 degrees C (about 350 degrees Fahrenheit). The finish frying time is within the range of 2 to 4 minutes. The resulting french fries will have a solids content of 45 to 70 percent by weight, including 0.5 to 2 percent sodium chloride and 7 to 20 percent oils. The preferred content of sodium chloride is 1.0 to 1.3 percent by weight. The composition of the frozen strips depends upon their size: smaller cut strips will tend to have relatively higher solids and oils contents; larger cut strips will have relatively lower solids and oils contents.

French fried potato strips prepared in accordance with the foregoing process are more similar to homemade french fries in appearance, texture, and flavor, than french fries made by conventional commercial processes. The steam blanching step contributes to the natural color variations by leaching less of the natural sugars from the raw potato. This color variation exists both within a single french fry and between french fries. The final product also has a darker color than most commercially prepared french fries. Similarly, this step adds to the crispy texture of the surface of the french fry and causes the interior to retain more of the natural potato flavor, resulting in a stronger potato flavor.

Immersion of the blanched strips in the hot sodium chloride brine causes the potato tissue to be infused with sodium chloride. This results in a finished product with a uniform salty flavor.

Partial dehydration of the strips immediately after they are removed from the brine solution also improves the flavor and texture of the final product. As the surface of the potato strips dry in the hot air, surface moisture is evaporated, concentrating the surface solids and salt residue. This prevents the sodium chloride from being lost in the parfrying step. The dehydration step also adds to the crispy surface texture of the final product while maintaining the moist interior texture which is typically found in homemade french fries.

### Example 1

Raw, cleaned Russet Burbank potatoes were preheated for 25 minutes in a water bath at 54 degrees C (130°F), and were then cut into 0.8 x 1.6 cm (5/16 by 5/8 inch) strips on an Urschel Laboratories, Inc. model GRL cutter. 1362 to 1816 g (Three to four pounds) of strips were placed in a perforated metal basket and were water blanched for 30 seconds at 77 degrees C (170°F). The strips were then placed in a vented steam cabinet and steam blanched for 1 minute at atmospheric pressure by injecting steam at 102 degrees C (216°F) directly into the cabinet. The steamed strips were again water blanched for 30 seconds at 77 degrees C (170°F), and then dipped for 30 seconds in a 88 degrees C (190 degree Fahrenheit) solution containing 4 percent sodium chloride by weight.

The potato strips were then placed in a conventional forced air cabinet dryer and were dried at 100°C (210°F) for approximately 4 to 6 minutes, resulting in a 12 to 14 percent weight loss. The partially dehydrated strips were then parfried in a conventional deep fat fryer for 55 seconds at 191 degrees C (375°F). The strips were then frozen at -29 degrees C (-20°F) in a conventional blast freezer.

The frozen french fries contained an average of 1.0 percent sodium chloride, 4.12 percent oils, and 30.66 percent solids.

The frozen french fries were reconstituted in a deep fat fryer at 182 degrees C (360°F) for 3 minutes, 30 seconds. The resulting french fries were typical of a homemade product and had a desirable golden color with some variation in color both between strips and within each strip. The fries had a crisp outside, and a moist interior texture. The natural potato flavor of the french fries was enhanced by the background salt flavor.

### Example 2

In another example, raw, peeled Russet Burbank potatoes were cut into 0.71 cm (9/32 inch) cross-section strips on an Urschel cutter. 1362 to 1816 g (Three to four pounds) of the strips were placed in a perforated metal basket and steam blanched at atmospheric pressure with 102 degrees C (216°F) steam for 1 minute in a vented steam cabinet. The steamed strips were then dipped in 18 degrees C (65°F) water for 30 seconds, and then dipped in a solution containing 2.5 percent sodium chloride and 0.30 percent dextrose for 30 seconds. This dipping solution was at 88 degrees C (190°F). The strips were then air-dried at 100 degrees C (210°F) for about 4 minutes, resulting in 10 to 12 percent weight loss. The partially dehydrated strips were then parfried for 30 seconds at 191 degrees C (375°F), and then frozen at -29 degrees C (-20°F).

The frozen french fries contained an average of 0.74 percent sodium chloride, 6.69 percent oils, and 34.63 percent solids, by weight.

The frozen french fries were reconstituted by deep fat frying at 182 degrees C (360°F) for 2 minutes, 45 seconds. The finished product had a relatively dark golden color similar to homemade fries, and had natural color variations both between fries and within each fry. The product had a crisp exterior and a moist interior. A background salt taste enhanced the hearty, natural potato.

### Example 3

In this example, raw, spiral-cut potatoes were steam blanched at atmospheric pressure in a vented steam cabinet for 1 minute, 15 seconds by injecting steam at 102 degrees C (216°F). The strips were then dipped in a solution containing 2.5 percent sodium chloride, 0.30 percent dextrose, and 0.75 percent sodium acid pyrophosphate for 30 seconds. This solution was held at 88 degrees C (190°F). The strips were then air dried at 100 degrees C (210°F) for 4 to 6 minutes, resulting in a 12 to 15 percent weight loss. The strip were then parfried at 191 degrees C (375°F) for 50 seconds, and were then frozen at -29 degrees C (-20°F). The frozen spiral-cut potatoes contained an average of 0.98 percent sodium chloride, 6.41 percent oils, and 36.32 percent solids, by weight.

The frozen product was reconstituted by deep fat frying at 182 degrees C (360°F) for 2 minutes, 45 seconds. The resulting product had a light golden color with some natural color variations, crispy outside and moist inside, a hearty potato flavor, and a slightly salty background taste.

## Claims

1. A process for preparing french fried potato strips suitable for reconstitution comprising the steps of:
cutting whole potatoes into strips;
blanching the strips in steam;
thereafter immersing the strips in a brine solution of sodium chloride;
immediately thereafter partially drying the strips for a period of time sufficient to cause a decrease in weight of at least about five percent;
parfrying the strips in oil; and
freezing the strips.

2. The method according to claim 1 wherein the strips are blanched in steam for 0.5 to 2 minutes.

3. The method according to claim 2 wherein the strips are blanched in steam for 1 minute.

4. The method according to claim 1 wherein the strips are immersed in the sodium chloride solution at a temperature and for a period of time sufficient to cause the strips to have a sodium chloride content of 0.5 to 2 percent by weight after parfrying.

5. The method according to claim 1 wherein the strips are immersed in a brine solution containing 1 to 6 percent sodium chloride by weight and at a temperature within the range of 65 to 100 degrees C (150 to 210 degrees Fahrenheit) for about 15 to 90 seconds.

6. The method according to claim 1 wherein the strips are immersed in a brine solution including 2 to 4 percent sodium chloride by weight and at a temperature within the range of 82 to 93 degrees C (180 to 200 degrees Fahrenheit) for about 30 to 45 seconds.

7. The method according to claim 1 wherein the strips are partially dried for a period of time and at a temperature sufficient to cause a decrease in weight of 10 to 15 percent.

8. The method according to claim 1 wherein the strips are dried in hot air at a temperature within the range of 65 to 109 degrees C (150 to 225 degrees Fahrenheit) for 4 to 15 minutes.

9. The method according to claim 1 wherein the strips are parfried in oil at a temperature of 163 to 204 degrees C (325 to 400 degrees Fahrenheit) for 10 to 120 seconds.

10. The method according to claim 1 wherein the strips are parfried for a period of time and at a temperature sufficient to cause the strips to have a solids content of 25 to 40 percent by weight when frozen.

11. The method according to claim 9 wherein the strips are parfried for a period of time and at a temperature sufficient to cause the strips to have a solids content of 25 to 40 percent by weight when frozen.

12. The method according to claim 1 wherein the frozen strips are reconstituted by frying in hot oil within a temperature range of 166 to 188 degrees C (330 to 370 degrees Fahrenheit), for 2 to 4 minutes, causing the strips to have a solids content within the range of 45 to 70 percent by weight, including 7 to 20 percent oils, and including 0.5 to 2 percent sodium chloride.

13. A process for preparing french fried potato strips suitable for reconstitution comprising the steps of:
cutting whole potatoes into strips;
blanching the strips in steam for 0.5 to 2 minutes;
thereafter immersing the strips in a brine solution containing about 1 to 6 percent sodium chloride by weight and at a temperature of 65 to 100 degrees C (150 to 210 degrees Fahrenheit);
immediately thereafter partially drying the strips in hot air at a temperature and for a period of time sufficient to cause a weight loss of at least about five percent;
parfrying the strips in oil; and
freezing the strips.

14. A frozen potato product suitable for finish frying prepared by a process which comprises the steps of:
cutting raw potatoes into strips;
blanching the strips in steam for 0.5 to 2 minutes;
immersing the strips in a brine solution consisting of about 1 to 6 percent sodium chloride by weight and at a temperature range of 65 to 100 degrees C (150 to 210 degrees Fahrenheit) for about 15 to 90 seconds;
partially drying the strips in hot air at a temperature within the range of 65 to 109 degrees C (150 to 225 degrees Fahrenheit) for a period of time sufficient to cause a decrease in weight of at least about five percent;
par frying the strips in oil at a temperature within the range of 163 to 204 degrees C (325 to 400 degrees Fahrenheit) for 10 to 120 seconds; and
freezing the strips.

15. A frozen potato product having solids within the range of 25 to 40 percent by weight, and a salt content of 0.5 to 2 percent by weight, and prepared by:
cutting whole potatoes into strips;
blanching the strips in steam;
thereafter immersing the strips in a sodium chloride brine solution;
immediately thereafter partially drying the strips in hot air;
parfrying the strips in oil; and
freezing the strips.

## Patentansprüche

1. Verfahren zur Herstellung von Pommes Frites, die zur Wiederzubereitung geeignet sind, das die Schritte umfaßt:
Schneiden ganzer Kartoffeln in Streifen;
Blanchieren der Streifen in Dampf;
nachfolgendes Eintauchen der Streifen in eine Salzlösung aus Natriumchlorid;
unmittelbar sich anschließendes Teiltrocknen der Streifen während einer Zeitdauer, die ausreichend ist, um eine Gewichtsabnahme von wenigstens 5 % zu bewirken;
Anbraten der Streifen in Öl; und
Einfrieren der Streifen.

2. Verfahren gemäß Anspruch 1, wobei die Streifen 0,5 bis 2 Minuten in Dampf blanchiert werden.

3. Verfahren gemäß Anspruch 2, wobei die Streifen 1 Minute in Dampf blanchiert werden.

4. Verfahren gemäß Anspruch 1, wobei die Streifen in die Natriumchloridlösung bei einer Temperatur und über eine Zeitdauer eingetaucht werden, die ausreichend sind, um zu bewirken, daß die Streifen einen Natriumchloridgehalt von 0,5 bis 2 Gew.-% nach dem Anbraten haben.

5. Verfahren gemäß Anspruch 1, wobei die Streifen in eine Salzlösung, die 1 bis 6 Gew.-% Natriumchlorid enthält, und bei einer Temperatur im Bereich von 65°C bis 100°C (150 bis 210°F) 15 bis 90 Sekunden eingetaucht werden.

6. Verfahren gemäß Anspruch 1, wobei die Streifen in eine Salzlösung, die 2 bis 4 Gew.-% Natriumchlorid enthält, und bei einer Temperatur im Bereich von 82°C bis 93°C (180 bis 200°F) 30 bis 45 Sekunden eingetaucht werden.

7. Verfahren gemäß Anspruch 1, wobei die Streifen während einer Zeitdauer und bei einer Temperatur teilgetrocknet werden, die ausreichend sind, um eine Gewichtsabnahme von 10 bis 15 % zu bewirken.

8. Verfahren gemäß Anspruch 1, wobei die Streifen in heißer Luft bei einer Temperatur im Bereich von 65°C bis 109°C (150 bis 225°F) 4 bis 15 Minuten getrocknet werden.

9. Verfahren gemäß Anspruch 1, wobei die Streifen in Öl bei einer Temperatur von 163 bis 204°C (325 bis 400°F) 10 bis 120 Sekunden angebraten werden.

10. Verfahren gemäß Anspruch 1, wobei die Streifen während einer Zeitdauer und bei einer Temperatur angebraten werden, die ausreichend sind, um zu bewirken, daß die Streifen einen Trockengehalt von 25 bis 40 Gew.-% haben, wenn sie gefroren sind.

11. Verfahren gemäß Anspruch 9, wobei die Streifen während einer Zeitdauer und bei einer Temperatur angebraten werden, die ausreichend sind, um zu bewirken, daß die Streifen einen Trockengehalt von 25 bis 40 Gew.% haben, wenn sie gefroren sind.

12. Verfahren gemäß Anspruch 1, wobei die gefrorenen Streifen durch Braten in heißem Öl innerhalb eines Temperaturbereichs von 166°C bis 188°C (330 bis 370°F) 2 bis 4 Minuten lang wiederzubereitet werden, wodurch bewirkt wird, daß die Streifen einen Trockengehalt im Bereich von 45 bis 70 Gew.-% haben, einschließlich 7 bis 20 % Öle, und einschließlich 0,5 bis 2 % Natriumchlorid.

13. Verfahren zur Herstellung von Pommes Frites, die zur Wiederzubereitung geeignet sind, das die Schritte umfaßt:
Schneiden ganzer Kartoffeln in Streifen;
Blanchieren der Streifen in Dampf für 0,5 bis 2 Minuten;
nachfolgendes Eintauchen der Streifen in eine Salzlösung, die ungefähr 1 bis 6 Gew.-% Natriumchlorid enthält, und bei einer Temperatur von 65°C bis 100°C (150 bis 210°F);
unmittelbar sich anschließendes Teiltrocknen der Streifen in heißer Luft bei einer Temperatur und während einer Zeitdauer, die ausreichend sind, um einen Gewichtsverlust von wenigstens ungefähr 5 % zu bewirken;
Anbraten der Streifen in Öl; und
Einfrieren der Streifen.

14. Gefrorenes Kartoffel-Produkt, das zum Fertigbraten geeignet und nach einem Verfahren hergestellt ist, das die Schritte umfaßt:
Schneiden roher Kartoffeln in Streifen;
Blanchieren der Streifen in Dampf für 0,5 bis 2 Minuten;
Eintauchen der Streifen in eine Salzlosung, die aus ungefähr 1 bis 6 Gew.-% Natriumchlorid besteht, und in einem Temperaturbereich von 65°C bis 100°C (150 bis 210°F) für ungefähr 15 bis 90 Sekunden;
Teiltrocknen der Streifen in heißer Luft bei einer Temperatur im Bereich von 65°C bis 109°C (150 bis 225°F) während einer Zeitdauer, die ausreichend ist, um eine Gewichtsabnahme von wenigstens ungefähr 5 % zu bewirken;
Braten der Streifen in Öl bei einer Temperatur im Bereich von 163°C bis 204°C (325 bis 400°F] für 10 bis 120 Sekunden; und
Einfrieren der Streifen.

15. Gefrorenes Kartoffel-Produkt mit einer Trockenmasse im Bereich von 25 bis 40 Gew.-% und einem Salzgehalt von 0,5 bis 2 Gew.-% und hergestellt durch:
Schneiden ganzer Kartoffeln in Streifen;
Blanchieren der Streifen in Dampf;
danach Eintauchen der Streifen in eine Natriumchlorid-Salzlösung;
unmittelbar danach Teiltrocknen der Streifen in heißer Luft;
Anbraten der Streifen in Öl; und
Einfrieren der Streifen.

## Revendications

1. Un procédé pour préparer des bandes de pommes de terre frites propres à être reconstituées, comprenant les étapes de :
couper des pommes de terre entières en bandes ;
blanchir les bandes à la vapeur ;
plonger ensuite les bandes dans une solution de saumure de chlorure de sodium ;
immédiatement ensuite sécher partiellement les bandes pendant une période de temps suffisante pour provoquer une diminution en poids d'au moins environ cinq pour cent ;
frire les bandes dans de l'huile ; et
congeler les bandes.

2. Le procédé conforme à la revendication 1, dans lequel les bandes sont blanchies à la vapeur pendant 0,5 à 2 minutes.

3. Le procédé conforme à la revendication 2, dans lequel les bandes sont blanchies à la vapeur pendant 1 minute.

4. Le procédé conforme à la revendication 1, dans lequel les bandes sont plongées dans la solution de chlorure de sodium à une température et pendant une période de temps suffisantes pour faire que les bandes aient une teneur en chlorure de sodium de 0,5 à 2 pour cent en poids après la friture.

5. Le procédé conforme à la revendication 1, dans lequel les bandes sont plongées dans une solution de saumure contenant de 1 à 6 pour cent de chlorure de sodium en poids et à une température dans la gamme de 65 à 100 degrés C (150 à 210 degrés Fahrenheit) pendant environ 15 à 90 secondes.

6. Le procédé conforme à la revendication 1, dans lequel les bandes sont plongées dans une solution de saumure incluant de 2 à 4 pour cent de chlorure de sodium en poids et à une température dans la gamme de 82 à 93 degrés C (180 à 200 degrés Fahrenheit) pendant environ 30 à 45 secondes.

7. Le procédé conforme à la revendication 1, dans lequel les bandes sont partiellement séchées pendant une période de temps et à une température suffisantes pour provoquer une diminution en poids de 10 à 15 pour cent.

8. Le procédé conforme à la revendication 1, dans lequel les bandes sont séchées dans de l'air chaud à une température dans la gamme de 65 à 109 degrés C (150 à 225 degrés Fahrenheit) pendant 4 à 15 minutes.

9. Le procédé conforme à la revendication 1, dans lequel les bandes sont frites dans de l'huile à une température de 163 à 204 degrés C (325 à 400 degrés Fahrenheit) pendant 10 à 120 secondes.

10. Le procédé conforme à la revendication 1, dans lequel les bandes sont frites pendant une période de temps et à une température suffisantes pour faire que les bandes aient une teneur en solide de 25 à 40 pour cent en poids lorsqu'elles sont congelées.

11. Le procédé conforme à la revendication 9, dans lequel les bandes sont frites pendant une période de temps et à une température suffisantes pour faire que les bandes aient une teneur en solide de 25 à 40 pour cent en poids lorsqu'elles sont congelées.

12. Le procédé conforme à la revendication 1, dans lequel les bandes congelées sont reconstituées par friture dans de l'huile chaude dans une gamme de température de 166 à 188 degrés C (330 à 370 degrés Fahrenheit) pendant 2 à 4 minutes, faisant que les bandes aient une teneur en solide dans la gamme de 45 à 70 pour cent en poids, incluant 7 à 20 pour cent d'huile et incluant 0,5 à 2 pour cent de chlorure de sodium.

13. Un procédé pour préparer des bandes de pommes de terre frites propres à être reconstituées, comprenant les étapes de :
couper des pommes de terre entières en bandes ;
blanchir les bandes à la vapeur pendant 0,5 à 2 minutes;
plonger ensuite les bandes dans une solution de saumure contenant environ 1 à 6 pour cent de chlorure de sodium en poids et à une température de 65 à 100 degrés C (150 à 210 degrés Fahrenheit) ;
immédiatement ensuite sécher partiellement les bandes à l'air chaud à une température et pendant une période de temps suffisantes pour provoquer une perte de poids d'au moins environ cinq pour cent ;
frire les bandes dans de l'huile ; et
congeler les bandes.

14. Un produit de pommes de terre congelé propre à une friture finale, préparé par un procédé qui comprend les étapes de :
couper des pommes de terre crues en bandes ;
blanchir les bandes à la vapeur pendant 0,5 à 2 minutes;
plonger les bandes dans une solution de saumure constituée d'environ 1 à 6 pour cent de chlorure de sodium en poids et à une gamme de température de 65 à 100 degrés C (150 à 210 degrés Fahrenheit) pendant environ 15 à 90 secondes ;
sécher partiellement les bandes à l'air chaud à une température dans la gamme de 65 à 109 degrés C (150 à 225 degrés Fahrenheit) pendant une période de temps suffisante pour provoquer une diminution en poids d'au moins environ cinq pour cent ;
frire les bandes dans de l'huile à une température dans la gamme de 163 à 204 degrés C (325 à 400 degrés Fahrenheit) pendant 10 à 120 secondes ; et
congeler les bandes.

15. Un produit de pommes de terre congelé ayant une teneur en solide dans la gamme de 25 à 40 pour cent en poids et ayant une teneur en sel de 0,5 à 2 pour cent en poids, et préparé par :
couper des pommes de terre entières en bandes ;
blanchir les bandes à la vapeur ;
plonger ensuite les bandes dans une solution de saumure de chlorure de sodium ;
immédiatement ensuite sécher partiellement les bandes à l'air chaud ;
frire les bandes dans de l'huile ; et
congeler les bandes.
